# EUROPÄISCHE PATENTANMELDUNG

(11) **EP 1 209 445 A2**
(43) Veröffentlichungstag der Anmeldung: **29.05.2002**
(21) Anmeldenummer: 01127703.5
(22) Anmeldetag: 21.11.2001
(51) Int. Cl.: G01C 21/32

(54) **Sytem und Verfahren zur Verwaltung von Navigationsdaten und Datenträger**

(30) Priorität: 24.11.2000 DE 10058433
(71) Anmelder: AUDI AG, 85045 Ingolstadt (DE)
(72) Erfinder: Creutzburg, Uwe, 30161 Hannover (DE)
(74) Vertreter: Thielmann, Frank

(57) **Zusammenfassung**

Die Erfindung betrifft ein System (10) zur Verwaltung von Navigationsdaten für ein Navigationssystem (1) umfassend einen Datenträger (5), auf dem die Navigationsdaten in Datenblöcke (A, B, C) unterteilt gespeichert sind, und auf dem den Datenblöcken (A, B, C) zumindest teilweise jeweils mindestens ein Code (A', B', C') zugeordnet ist, eine Freigabeeinheit (4) zum Freigeben der in mindestens einem Datenblock (A, B, C) gespeicherten Daten bei Vorliegen des mit dem mindestens einen Datenblock (A, B, C) korrespondierenden Codes, und ein Lesegerät (2), zum Auslesen der freigegebenen Daten.

## Beschreibung

Die Erfindung bezieht sich auf ein System zur Verwaltung von Navigationsdaten für ein Navigationssystem, insbesondere zur Verwendung in einem Kraftfahrzeug. Die Erfindung bezieht sich weiterhin auf ein Verfahren zur Verwaltung der Navigationsdaten und auf einen Datenträger mit Navigationsdaten.

Zur Vereinfachung der Navigation eines Fahrzeuges, insbesondere in einer Region, in der der Fahrer des Fahrzeuges nicht ortskundig ist, sind Navigationssysteme entwickelt worden, die es dem Fahrer ermöglichen, Informationen über die Umgebung, in der er sich befindet, abzufragen. Durch solche Navigations- oder Informationssysteme können dem Fahrer sowohl Informationen bezüglich des Straßenverlaufs, als auch bezüglich weiterer Detailinformationen, wie der Straßenbedingungen oder Sehenswürdigkeiten, zur Verfügung gestellt werden. Diese Informationen bzw. Daten werden auf Datenträgern gespeichert, die in das Navigationsgerät in dem Fahrzeug eingesetzt bzw, eingelegt werden und über das Navigationsgerät von dem Fahrer abgefragt werden können.

In der Regel werden die Daten so verwaltet, dass die Daten für verschiedene Gebiete auf verschiedenen Datenträgern gespeichert werden. So werden beispielsweise Datenträger mit Informationen für Europa, Deutschland oder auch spezielle Regionen, wie den Bodensee, bereitgestellt.

Bei diesem herkömmlichen Verwaltungssystem von Navigationsdaten, bei denen die Daten einzelner Länder oder Regionen auf verschiedenen Datenträgern gespeichert sind, besteht der Nachteil, dass ein Fahrer, der beispielsweise zwei Regionen durchfahren will, entweder zwei Datenträger mit den Informationen zu der jeweiligen Region mit sich führen muss, oder einen Datenträger erstehen muss, auf dem eine übergeordnete Region, beispielsweise ein Land, abdeckt ist, in dem die beiden Regionen liegen. Die erste Alternative ist umständlich und die zweite Alternative bringt unnötige Ausgaben für den Fahrer mit sich, da der Fahrer einen Datenträger benutzen muss, auf dem außer den Daten über die von ihm gewünschten Regionen auch noch Daten über weitere Regionen vorhanden sind, die von dem Fahrer nicht benötigt, aber in dem Kaufpreis des Datenträgers berücksichtigt werden müssen.

Die US 5,596,639 beschreibt einen Kopierschutz einer CD-ROM zur Verwendung in einem PC und einen passwortgeschützten Zugrif auf die darauf enthaltenen Programme. Dazu werden bestimmte Sektoren physikalisch zerstört und Passwortinformation in unbenutzten Teilen der CD-ROM versteckt. Damit soll das Problem gelöst werden, Daten auf der CD-ROM gegen unberechtigten Zugriff durch einen frei programmierbaren general-purpose PC zu schützen.

Aufgabe der Erfindung ist es, ein System und ein Verfahren zur Verwaltung von Navlgationsdaten zu schaffen, wobei diese die Nachteile des Standes der Technik ausräumen sollen, insbesondere einfach und zuverlässig sein sollen und den speziellen Wünschen des Benutzers der Navigationsdaten leicht anzupassen sein sollen. Weiterhin ist es Aufgabe, einen Datenträger mit Navigationsdaten zur Verfügung zu stellen, der in einem solchen System zum Einsatz kommen kann.

Der Erfindung liegt die Erkenntnis zugrunde, dass diese Aufgabe gelöst werden kann durch ein System, ein Verfahren und einen Datenträger, die einen gezielten Zugriff auf spezielle Daten zulassen.

Diese Aufgabe wird erfindungsgemäß gelöst durch ein System zur Verwaltung von Navigationsdaten für ein Navigationssystem, wobei das Verwaltungssystem einen Datenträger, auf dem die Navigationsdaten in Datenblöcken unterteilt gespeichert sind, und auf dem den Datenblöcken zumindest teilweise jeweils mindestens ein Code zugeordnet ist, eine Freigabeeinheit zum Freigeben der in mindestens einem Datenblock gespeicherten Daten bei Vorliegen des mit dem mindestens einen Datenblock korrespondierenden Codes, und ein Lesegerät zum Auslesen der freigegebenen Daten, umfasst.

Unter Code ist im Sinne dieser Erfindung ein Zugriffsschutz auf Daten zu verstehen, der durch geeignete Mittel aufgehoben werden kann. Der Code kann beispielsweise das Erfordernis der Eingabe eines Passwortes darstellen, wobei das Passwort dem System anzeigt, für den Zugriff welcher Datenblöcke der Benutzer berechtigt ist. Der Code kann auch eine Verschlüsselung darstellen, durch den die damit codierten Daten nur durch Verwendung eines Schlüssels zum Entschlüsseln ausgelesen werden können.

Unter Datenblöcken wird im Sinne dieser Erfindung jede Gruppe der normalerweise für Navigationssysteme notwenigen Navigationsdaten verstanden, die geeignet ist, mittels eines einzigen Codes vor unbefugtem Zugriff geschützt zu werden. Vorzugsweise enthält ein Datenblock die Navigationsdaten für eine Stadt, ein Bundesland, eine Region oder einen Staat. Ein Datenblock kann aber auch beispielsweise die Navigationsdaten für Hauptverkehrsstrassen oder Nebenstrassen enthalten.

Als Lesegerät wird in der Regel ein Teil des in einem Fahrzeug installierten Navigationssystems dienen. Über dieses können die Daten von dem Datenträger ausgelesen werden und dann an Verarbeitungs- oder Anzeigevorrichtungen des Navigationssystems weitergeleitet werden.

Als Freigabeeinheit wird eine Einheit bezeichnet, über die ein Code, der einem oder mehreren Datenblöcken zugeordnet ist aufgehoben werden kann. Die Einheit kann eine reine Verbindung zum Weiterleiten von Passworten oder anderen Datenschlüsseln darstellen, sie kann aber auch eine Vorrichtung darstellen, in der mittels Eingabe von Daten, ein Datenschlüssel zum Decodieren eines gespeicherten Codes erzeugt werden kann.

Mit diesem erfindungsgemäßen System ist es möglich, eine Vielzahl von Navigationsdaten, z.B. für verschiedene Länder oder Regionen, auf einem Datenträger zusammenzufassen. Dies ist erstrebenswert, da dadurch die Logistik bei der Herstellung der Datenträger vereinfacht und somit auch die Herstellungskosten gesenkt werden können. Gleichzeitig kann bei dem erfindungsgemäßen System der Zugriff auf die gespeicherten Daten gesteuert werden. Es ist daher möglich, einem Fahrer, der nur an gewissen Regionen interessiert ist, ausschließlich den Zugriff auf die für diese Regionen notwendigen Navigationsdaten zu geben. Dies wird bei dem erfindungsgemäßen System dadurch realisiert, dass die einzelnen Datenblöcke mit jeweils mindestens einem Code versehen sind.

Im Gegensatz zur Lehre der US 5,596,639 besteht bei der vorliegenden Erfindung die volle Kontrolle über Hardware, Software und Datenträger, die damit zur Zugriffsregelung aufeinander abgestimmt werden können. Eine physikalische Zerstörung bestimmter Abschnitte auf der CD-ROM ist daher nicht nötig. Insbesondere wird dadurch die Möglichkeit eröffnet, einen zeitlich befristeten Zugriff auf bestimmte Daten des Datenträgers zu ermöglichen, diesen dann wieder zu verbieten und, gegebenenfalls für die nächste Urlaubs- oder Geschäftsreise in diese Region, wieder freizugeben. Dadurch, daß Datenträger und Navigationssystem aufeinander abgestimmt sind, erlaubt die Erfindung, über verschiedene Codes nahezu beliebige Kombinationen von Datensätzen freizuschalten oder zu sperren.

Während die US 5,596,639 sich mit physikalischen Blöcken auf einem Speichermedium beschäftigt, befaßt sich die vorliegende Erfindung mit spezifischen Abfragen an eine "Datenbank", bei der die physikalische Repräsentation der Daten unrelevant ist.

In dem erfindungsgemäßen Verwaltungssystem ist jedem Datenblock mindestens ein Code zugeordnet. Hierbei kann ein Code auch gleichzeitig mehrere Datenblöcke erfassen, d.h. durch Aufheben eines solchen Zugriffschutzes, beispielsweise durch Eingabe eines Passwortes, können gleichzeitig mehrere Datenblöcke freigegeben werden. Dies kann dann sinnvoll sein, wenn jeder Datenblock die Navigationsdaten einer Stadt enthält, der Fahrer aber an einer Gesamtübersicht der Region, in der die Städte liegen, interessiert ist. Die Daten werden vorzugsweise so auf dem Datenträger gespeichert, dass abhängig von der Anfrage des Fahrers verschiedene Datenblöcke gebildet werden können, d.h. die Daten können kundenspezifisch konfiguriert werden.

Der Code stellt bevorzugt eine Zugriffsberechtigung für einzelne oder mehrere Blöcke dar und ist bevorzugt in der Software der Freigabeeinheit abgelegt. Es kann jedoch auch vorgesehen werden, zumindest Telle auf dem Datenträger mittels eines Codes zu verschlüsseln.

Die Datenträger, die in dem erfindungsgemäßen Verwaltungssystem verwendet werden, stellen vorzugsweise Medien, wie DVD's oder CD's, dar. Es liegt aber auch im Rahmen der Erfindung, für das Verwaltungssystem ein Speichermedium eines Computers, wie z.B. eine Festplatte, zu verwenden. Bei dieser Ausführungsform können die Daten beispielsweise auf einem Server gespeichert sein und über berührungslose Übertragungstechniken an das in dem Fahrzeug befindliche Navigationssystem übertragen werden.

In einer bevorzugten Ausführungsform ist das Verwaltungssystem so ausgelegt, dass der Code bzw. die Codes fahrzeuggebunden, d.h. fahrzeugspezifisch ist bzw. sind. Der Code erlaubt also den Zugriff auf die Daten nur von dem Fahrzeug aus, in dem das Navigationssystem betrieben wird. Diese Ausführungsform ist besonders für Verwaltungssysteme geeignet, bei dem der Datenträger beispielsweise eine DVD darstellt. Wird diese von dem Fahrer eines Fahrzeuges erstanden, werden den auf dem Datenträger gespeicherten Datenblöcken Codes zugeordnet, die nur von dem Fahrzeug des Fahrers aus decodiert werden können. Wird die DVD also entwendet kann diese in einem anderen Fahrzeug nicht eingesetzt werden, da die Datenblöcke nicht freigegeben werden. Durch die Vernetzung im Fahrzeug können verschiedene Geräte die Quelle der Freigabecodes sein, auch drahtlose, zum Beispiel das Telefon bzw. die Telematikeinheit des Fahrzeugs, jedoch auch ein Kartenleser oder jedes andere geeignete Gerät, wie beispielsweise ein Werkstatt-Diagnosetester.

Als Freigabeeinheit kann ein Teil einer Abfrageeinheit dienen, über die entweder durch den Fahrer selbst oder mittels eines automatisierten Vorgangs durch das Navigationssystem eine Abfrage nach speziellen Navigationsdaten gestartet werden kann. Die Abfrageeinheit wird in der Regel in dem Bedienungsgerät des Navigationssystems, das sich im Armaturenbrett oder in der Mittelkonsole des Fahrzeuges befinden kann, untergebracht sein. Über ein spezielles Menü dieses Gerätes kann die Freischaltung der angeforderten Daten beispielsweise durch Eingabe eines Passwortes oder Codes erfolgen. Neben dieser manuellen Eingabe ist es auch möglich die Freigabeeinheit berührungslos mit Daten zu versorgen. So kann beispielsweise von einer extern, z.B. beim Fahrzeug- oder Navigationssystem-Hersteller befindlichen Datenbank, ein Datenschlüssel an das Navigationssystem gesandt werden, wodurch dem Benutzer des Navigationssystems der Zugriff auf die gewünschten Daten ermöglicht wird.

Das erfindungsgemäße Verfahren zur Verwaltung von Navigationsdaten, die auf einem Datenträger gespeichert sind und bei denen Datenblöcken der Navigationsdaten jeweils mindestens ein Code zugeordnet ist, umfasst insbesondere die Schritte des Eingebens eines Datenschlüssels zum Aufheben des Zugriffschutzes, Überprüfen dieses Datenschlüssels daraufhin, welche Datenblöcke durch diesen Datenschlüssel freizugeben sind, und dadurch das Schaffen der Möglichkeit, die freigegebenen Datenblöcke über mindestens ein Lesegerät auszulesen. Der Datenschlüssel kann ein Passwort oder einen Algorithmus darstellen, der das Lesen verschlüsselter Daten erlaubt.

Das erfindungsgemäße Verfahren ist nicht auf das einmalige Eingeben eines Datenschlüssels beschränkt. Es ist vielmehr auch möglich, nach dem Freischalten einer Reihe von Datenblöcken einen weiteren Datenschlüssel einzugeben, durch den weitere Datenblöcke zugänglich werden. Ein solches späteres Eingeben eines Datenschlüssels stellt einen Vorteil des erfindungsgemäßen Verfahrens und des verwendeten Systems dar, da sich ein Fahrer jederzeit über Eingabe eines weiteren Datenschlüssels den Zugriff auf Navigationsdaten zusätzlicher Gebiete verschaffen kann. Dadurch sind das Verfahren und das System der Erfindung sehr flexibel.

Bei dem erfindungsgemäßen Verfahren kann es hilfreich sein, wenn der Datenschlüssel von einer externen Einheit zur Verfügung gestellt wird. In diesem Fall muss der Datenschlüssel nicht von dem Fahrer eingegeben werden und die Gefahr des Missbrauchs, der auftreten kann, wenn der Datenschlüssel, z.B. das Passwort, Dritten bekannt wird, ist dadurch verringert.

In einer Ausführungsform des Verfahrens gemäß der Erfindung wird zunächst über das Navigationssystem eine Anfrage zur Freischaltung gewisser Datenblöcke an eine externe Einheit gesandt, in der externen Einheit dann ein Datenschlüssel zum Freischalter der angefragten Datenblöcke erzeugt, wobei in dem Datenschlüssel fahrzeugspezifische Daten verwendet werden, dieser Datenschlüssel an das Navigationssystem und von dort an den Datenträger übermittelt und dadurch nach Überprüfung, welche Datenblöcke durch diesen Datenschlüssel freigeschaltet werden, ein Zugriff auf die angefragten Datenblöcke über das Navigationssystem ermöglicht.

Dieses Verfahren kann beispielsweise vorteilhaft angewandt werden, wenn der Hersteller des Fahrzeuges eine zentrale Datenbank für die jeweils benötigten Datenschlüssel führt, oder die Datenschlüssel dort unter Verwendung geeigneter Algorithmen bildet, wobei diese Datenbank oder der Ort, an dem die Datenschlüssel gebildet werden, als externe Einheit dient.

Bei einer bevorzugten Ausführungsform der Erfindung besteht die Möglichkeit, den Code zeitlich begrenzt zu vergeben. Dadurch lassen sich bestimmte Regionen zum Beispiel für die Zeitdauer einer Urlaubs- oder Geschäftsreise freischalten, indem das Passwort bzw. der Code nach der vorgesehenen Zeitdauer abläuft oder unwirksam wird. Die zeitliche Begrenzung eines Codes erlaubt selbstverständlich auch Einschränkungen anderer Art, zum Beispiel betreffend Umfang und Detaillierung der Daten, Sonderinformationen, Serverdienste, Fahrzeug bzw. Navigationssystem und Kombinationen daraus.

Der in dem Verfahren und System verwendete Datenträger zeichnet sich dadurch aus, dass darauf Daten in einer solchen Datenstruktur gespeichert sind, die es erlaubt, die Daten in Datenblöcken zusammenzufassen, wobei die so gebildeten Datenblöcke jeweils mit mindestens einem Code versehen sind.

Die Erfindung wird im Folgenden anhand der beiliegenden Zeichnungen, die Ausführungsbeispiele darstellen, beschrieben.

Es zeigen:
Figur 1: ein Blockschaltbild einer Ausführungsform des erfindungsgemäßen Systems; und
Figur 2: eine Darstellung dreier Datenblöcke.

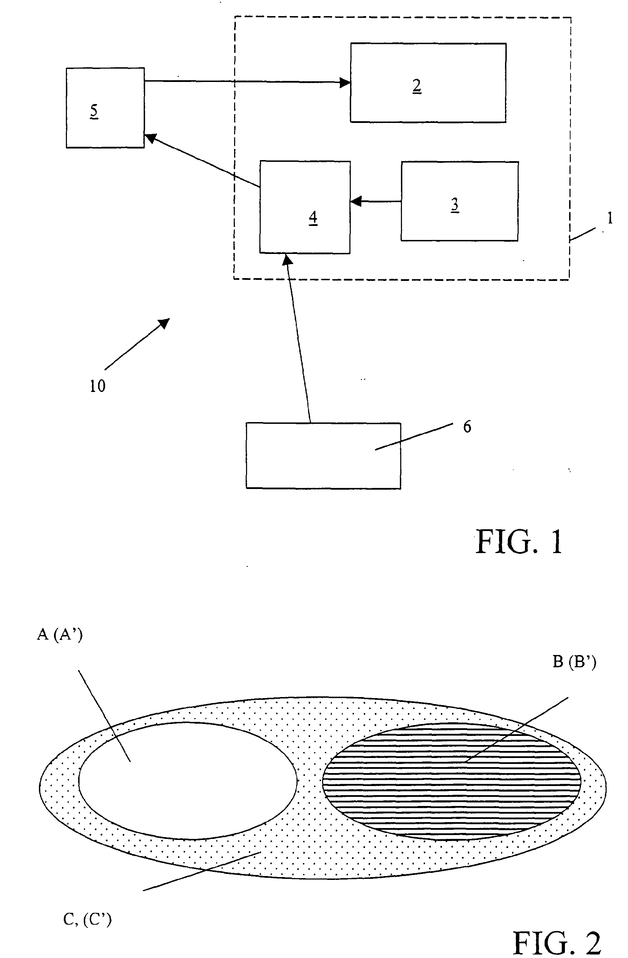

In Figur 1 ist schematisch eine Ausführungsform des erfindungsgemäßen Systems 10 wiedergegeben. Ein Navigationssystem 1, das den Aufbau eines herkömmlichen Navigationssystems mit Display haben kann, umfasst unter anderem ein Lesegerät 2, eine Abfrageeinheit 3 und eine Freigabeeinheit 4. In Figur 1 ist getrennt von dem Navigationssystem 1 ein Datenträger 5 dargestellt, der in Zusammenhang mit einem solchen Navigationssystem 1 verwendet werden kann. Schließlich ist eine externe Einheit 6 gezeigt, die beispielsweise eine Datenbank für Datenschlüssel darstellen kann.

Eine mögliche Funktionsweise des erfindungsgemäßen Systems 10 soll anhand dieses Aufbaus beschrieben werden. Ein Fahrer, der das Navigationssystem kauft, erhält einen Datenträger 5 auf dem beispielsweise alle Navigationsdaten für Europa gespeichert sind. Die Daten sind im Ausgangszustand für den Fahrer nicht zugänglich. Nachdem der Fahrer angibt, für welche Bereiche, beispielsweise welche Länder, er die Navigationsdaten erhalten möchte, wird ihm von dem Hersteller des Fahrzeuges oder dem Hersteller des Navigationssystems ein Datenschlüssel für die jeweiligen Länder übermittelt. In der dargestellten Ausführungsform erfolgt dies, indem von einer Datenbank 6 der Datenschlüssel zum Entschlüsseln der Navigationsdaten der entsprechenden Bereiche übermittelt wird. Diese Übermittlung kann durch Senden eines Signals an das Navigationssystem erfolgen, wobei der Datenschlüssel vorzugsweise erneut verschlüsselt ist. Alternativ kann der Datenschlüssel dem Fahrer auch direkt mitgeteilt werden, der den Datenschlüssel dann in das Navigationssystem eingibt. In der Datenbank wird vorzugsweise der Datenschlüssel so entwickelt, dass dieser für das Fahrzeug des Fahrers spezifisch ist, d.h. nur von diesem Fahrzeug aus verwendet werden kann.

Gibt der Fahrer nun mittels der Abfrageeinheit 3 eine Abfrage ein, die sich auf eines der von ihm gewünschten Gebiete bezieht, wird diese Abfrage über die Freigabeeinheit 4 geleitet. Dort ist der von der Datenbank 6 übermittelte Datenschlüssel vorhanden, so dass durch das von der Freigabeeinhait 4 an den Datenträger 6 übermittelte Signal die Daten der speziellen Bereiche abgefragt und über das Lesegerät 2 ausgelesen werden können.

Wird für ein Land, für das der Fahrer keinen Datenschlüssel erhalten hat, eine Abfrage gestartet, so wird die Freigabeeinheit 4 diese gegebenenfalls gar nicht an den Datenträger 5 weiterleiten, oder das Signal wird an den Datenträger 5 weitergeleitet, aber da für den Code für dieses Land kein Datenschlüssel vorliegt, die entsprechenden Daten nicht an das Lesegerät 2 weitergeleitet.

Für die Verbindungen zwischen den einzelnen Elementen des Systems und die Übertragung von Daten und Signalen können bekannte Verbindungs- und Übertragungsarten eingesetzt werden.

In Figur 2 ist schematisch dargestellt, wie die Datenblöcke und die dazugehörigen Codes ausgelegt sein können. Beispielsweise können in A die Daten für Deutschland und In B die Daten für Frankreich gespeichert sein, wobei der Datenblock C die Daten für Europa enthalten kann. Bei einer solchen Aufteilung der Daten kann dem Block A ein Code A', dem Block B ein Code B' und dem Code C ein Code C' zugeordnet werden. Wie sich aus dieser Darstellung zeigt, ermöglicht ein Datenschlüssel für den Code C' den Zugriff auf den Block A als auch den Block B, während ein Datenschlüssel für den Code B' lediglich Zugriff auf die Daten in Block B gewähren würde.

## Patentansprüche

1. System (10) zur Verwaltung von Navigationsdaten für ein Navigationssystem (1) umfassend:
- einen Datenträger (5), auf dem die Navigationsdaten in Datenblöcke (A, B, C) unterteilt gespeichert sind, und auf dem den Datenblöcken (A, B, C) zumindest teilweise jeweils mindestens ein Code (A', B', C') zugeordnet ist,
- eine Freigabeeinhelt (4) zum Freigeben der in mindestens einem Datenblock (A, B, C) gespeicherten Daten bei Vorliegen des mit dem mindestens einen Datenblock (A, B, C) korrespondierenden Codes; und
- ein Lesegerät (2) zum Auslesen der freigegebenen Daten.

2. Verwaltungssystem gemäß Anspruch 1, **dadurch gekennzeichnet, dass** der Datenträger (5) eine DVD darstellt.

3. Verwaltungssystem gemäß Anspruch 1 oder 2, **dadurch gekennzeichnet, dass** der Code durch einen Algorithmus zur Verschlüsselung der Daten dargestellt ist.

4. Verwaltungssystem gemäß Anspruch 1 oder 2, **dadurch gekennzeichnet, dass** der Code einen Passwortschutz darstellt.

5. Verwaltungssystem gemäß einem der vorstehenden Ansprüche, **dadurch gekennzeichnet, dass** der Code fahrzeuggebunden ist.

6. Verwaltungssystem gemäß einem der vorstehenden Ansprüche, **dadurch gekennzeichnet, dass** der Code eine zeitliche Begrenzung umfaßt.

7. Verwaltungssystem gemäß einem der vorstehenden Ansprüche, **dadurch gekennzeichnet, dass** die Freigabeeinheit (4) einen Teil einer Abfrageeinheit (3) darstellt.

8. Verwaltungssystem gemäß einem der Ansprüche 1 bis 6, **dadurch gekennzeichnet, dass** die Freigabeeinheit (4) berührungslos mit Daten versorgt werden kann.

9. Verfahren zur Verwaltung von Navigationsdaten, die auf einem Datenträger (5) gespeichert sind und bei denen Datenblöcken der Navigationsdaten jeweils mindestens ein Code zugeordnet ist, wobei zum Aufheben des Codes ein Datenschlüssel eingegeben wird, dieser Datenschlüssel daraufhin überprüft wird, welche Datenblöcke durch diesen Datenschlüssel freizugeben sind, und diese freigegebenen Datenblöcke über mindestens ein Lesegerät (2) ausgelesen werden können.

10. Verfahren nach Anspruch 9, **dadurch gekennzeichnet, dass** der Datenschlüssel zum Aufheben des Codes ein Passwort darstellt.

11. Verfahren nach Anspruch 9, **dadurch gekennzeichnet, dass** der Datenschlüssel zum Aufheben des Codes einen Algorithmus darstellt.

12. Verfahren gemäß Anspruch 9, 10 oder 11, **dadurch gekennzeichnet, dass** eine weitere Eingabe von Datenschlüsseln möglich ist, durch die weitere Datenblöcke freigegeben werden können.

13. Verfahren gemäß Anspruch 9, **dadurch gekennzeichnet, dass** zum Aufheben des Codes ein Datenschlüssel von einer externen Einheit (6) zur Verfügung gestellt wird.

14. Verfahren gemäß Anspruch 9, **dadurch gekennzeichnet, dass** zunächst über das Navigationssystem (1) eine Anfrage zur Freischallung gewisser Datenblöcke an eine externe Einheit (6) gesandt wird, in der externen Einheit (6) ein Datenschlüssel zum Freischalten der angefragten Datenblöcke erzeugt wird, wobei der Datenschlüssel fahrzeugspezifisch ist, dieser Datenschlüssel an das Navigationssystem (1) und von dort an den Datenträger (5) übermittelt wird und dadurch ein Zugriff auf die angefragten Datenblöcke über das Navigationssystem (1) ermöglicht wird.

15. Datenträger mit Navigationsdaten zur Verwendung in einem Verwaltungssystem (10) nach einem der Ansprüche 1 bis 8 oder einem Verfahren nach einem der Ansprüche 9 bis 14, **dadurch gekennzeichnet, dass** auf dem Datenträger (5) Daten in Datenblöcken gespeichert sind, die jeweils mit mindestens einem Code versehen sind.

16. Datenträger gemäß Anspruch 15, **dadurch gekennzeichnet, dass** ein Code für mehrere Datenblöcke wirkt.

17. Datenträger nach Anspruch 15 oder 16 **dadurch gekennzeichnet, dass** jeder Datenblock die Navigationsdaten für eine Stadt, ein Bundesland, eine Region oder einen Staat enthält.
